# DEMANDE DE BREVET EUROPEEN

(11) **EP 3 421 881 A1**
(43) Date de publication de la demande: **02.01.2019**
(21) Numéro de dépôt: 18180518.5
(22) Date de dépôt: 28.06.2018
(51) Int. Cl.: F21V 8/00, B60Q 3/62, B23K 26/36

(54) **GUIDE OPTIQUE FACONNÉ AU LASER**

(30) Priorité: 30.06.2017 FR 1756231
(71) Demandeur: Valeo Vision, 93012 Bobigny Cedex (FR)
(72) Inventeur: ALBESSARD, Jean-Marc, 81205 MAZAMET (FR); RASOLDIER, Nirina, 93012 BOBIGNY Cedex (FR); LE CORRE, Jérôme, 93012 BOBIGNY Cedex (FR); LIARD, Laurent, 93012 BOBIGNY Cedex (FR); DUCLOUX, Bruno, 93012 BOBIGNY Cedex (FR); LEFEBVRE, Alexandre, 93012 BOBIGNY Cedex (FR)
(74) Mandataire: Valeo Vision

(57) **Abrégé**

L'invention a trait à un procédé de fabrication d'un guide optique (12) de lumière, comprenant les étapes suivantes: mise à disposition du guide optique (12) s'étendant suivant une direction principale, ledit guide présentant une surface extérieure ; réalisation le long de la surface extérieure du guide optique, suivant la direction principale, de motifs diffusants ou réfléchissants aptes faire sortir dudit guide la lumière ; et la réalisation des motifs diffusants ou réfléchissants est assurée par application d'un rayon laser sur la surface extérieure du guide optique (12). L'invention concerne en outre un guide optique de lumière en matériau transparent ou translucide, avec au moins une nervure longitudinale, la nervure ayant au moins une encoche à moins de 50 mm d'une face d'extrémité dudit guide, et un module lumineux comprenant une zone de réception du guide optique de lumière, la zone formant un fourreau apte à recevoir une extrémité du guide optique et ayant des moyens d'engagement avec l'encoche du guide.

## Description

L'invention a trait au domaine de l'éclairage et de la signalisation lumineuse, notamment pour véhicule automobile. Plus particulièrement, l'invention a trait au domaine de l'éclairage et de la signalisation lumineuse au moyen de guides optiques de lumière.

Dans le domaine de l'éclairage et de la signalisation lumineuse pour véhicule automobile, il est de plus en plus fréquent d'utiliser des guides optiques. En effet, ceux-ci présentent l'avantage de pouvoir prendre des formes géométriques très variées et d'amener une surface éclairante dans des zones peu accessibles d'un dispositif d'éclairage et/ou de signalisation. Ceci est particulièrement intéressant dans le contexte actuel où les constructeurs automobiles cherchent à donner à leurs véhicules une signature qui leur est propre, notamment en proposant des formes complexes aux dispositifs d'éclairage et/ou de signalisation.

Par guide optique, on vise dans la présente demande une pièce transparente ou translucide, dans le domaine des longueurs d'ondes visibles, à l'intérieur de laquelle des rayons lumineux se propagent de manière contrôlée depuis au moins une des extrémités du guide, appelée face d'entrée, jusqu'à au moins une face de sortie. La propagation de la lumière de manière contrôlée s'effectue généralement par des réflexions totales successives sur diverses faces de réflexion internes au guide optique.

Le document de brevet publié EP 1 434 000 A2 divulgue un guide optique en forme de plaque et pourvu, sur une de ses faces principales, de motifs creux diffusants ou réfléchissants, répartis sur la face en question et destinés à permettre à la lumière se propageant dans le guide de sortir dudit guide. Dans le cas de motifs diffusants, ceux-ci présentent un état de surface dépoli alors que dans le cas de motifs réfléchissants, leur état de surface est poli. Ces motifs sont réalisés directement lors du moulage du guide optique en munissant le moule de reliefs correspondants.

Le document de brevet publié US 2010/0157619 A1 divulgue également un guide optique, toutefois de section généralement circulaire, et de forme allongée suivant une direction principale. Le guide comprend également des motifs réfléchissants ou diffusants répartis sur une face du guide le long de la direction principale. Ces motifs sont réalisés également lors du moulage du guide et éventuellement par l'application additionnelle d'une peinture ou d'un revêtement réfléchissant ou diffusant.

Le document de brevet publié DE 10 2013 007 938 A1 divulgue également un guide optique sous forme de plaque flexible et également pourvu de motifs réalisés par des points de peinture surmoulés.

Dans les trois enseignements susmentionnés, les guides optiques sont réalisés par moulage. Or pour certaines applications, les guides optiques présentent une longueur importante, notamment supérieure ou égale à 1000mm. Il est alors préférable d'un point de vue coût de fabrication, de produire ces guides par extrusion, notamment lorsque la section transversale de guide est généralement circulaire ou ovale. Un tel procédé de fabrication, connu en soi de l'homme de métier, ne permet pas de réaliser les motifs réfléchissants ou diffusants. Par ailleurs, la réalisation de motifs par moulage est contraignante en ce que leur configuration, c'est-à-dire leur taille, forme et positionnement, est figée par le moule.

L'invention a pour objectif de pallier au moins un des inconvénients de l'état de la technique susmentionné. Plus particulièrement, l'invention a pour objectif de permettre la réalisation de motifs réfléchissants ou diffusants sur un guide optique, et ce de manière économique et flexible.

L'invention a pour objet un procédé de fabrication d'un guide optique de lumière, comprenant les étapes suivantes : mise à disposition du guide optique s'étendant suivant une direction principale, ledit guide présentant une surface extérieure ; réalisation le long de la surface extérieure du guide optique, suivant la direction principale, de motifs diffusants ou réfléchissants aptes faire sortir dudit guide la lumière ; remarquable en ce que la réalisation des motifs diffusants ou réfléchissants est assurée par application d'un rayon laser sur la surface extérieure du guide optique.

Selon un mode avantageux de l'invention, à l'étape de mise à disposition du guide optique, ledit guide présente une section constante.

Selon un mode avantageux de l'invention, à l'étape de mise à disposition du guide optique, ledit guide est réalisé par extrusion.

Selon un mode avantageux de l'invention, le procédé comprend une étape préalable de réalisation du guide optique par extrusion.

Selon un mode avantageux de l'invention, le guide optique est en matériau thermoplastique transparent ou translucide, dans le domaine des longueurs d'ondes visibles, préférentiellement en poly(méthacrylate de méthyle) PMMA.

Selon un mode avantageux de l'invention, à l'étape de réalisation des motifs diffusants ou réfléchissants, le rayon laser est émis par un laser au CO₂ émettant dans l'infrarouge entre 9,4 et 10,6 µm.

Selon un mode avantageux de l'invention, à l'étape de réalisation des motifs diffusants ou réfléchissants, la configuration desdits motifs est évolutive le long de la direction principale du guide. Par configuration évolutive, on entend que la taille, l'espacement et/ou la forme des motifs présentent des variations le long de la direction principale du guide optique. Une telle variation peut notamment être configurée pour compenser les pertes progressives de lumière le long du guide.

Selon un mode avantageux de l'invention, le procédé comprend, en outre, l'étape suivante : polissage d'au moins une face d'extrémité du guide optique par application d'un rayon laser sur ladite face. Cette étape peut avoir lieu avant, pendant ou après l'étape de réalisation des motifs diffusants ou réfléchissants.

Le polissage de la au moins une face d'extrémité du guide optique peut également avoir lieu par polissage mécanique et/ou plaquage à chaud de ladite face.

Selon un mode avantageux de l'invention, à l'étape de mise à disposition du guide optique, ledit guide présente au moins une nervure longitudinale, et le procédé comprend, en outre, l'étape suivante : réalisation d'au moins une encoche dans la ou une des nervures par enlèvement de matière au moyen d'un rayon laser.

Selon un mode avantageux de l'invention, la ou les encoches sont situées à moins de 50mm d'une face d'extrémité du guide optique.

L'invention a également pour objet un guide optique de lumière en matériau transparent ou translucide, dans le domaine des longueurs d'ondes visibles, s'étendant suivant une direction principale ; remarquable en ce que le guide comprend, en outre, au moins une nervure longitudinale, ladite nervure ou au moins une desdites nervures formant au moins une encoche à moins de 50mm d'une face d'extrémité dudit guide.

La ou les encoches sont avantageusement réalisées par enlèvement de matière dans la ou les nervures, en particulier au moyen d'un faisceau laser.

Selon un mode avantageux de l'invention, le guide présente une portion s'étendant depuis la face d'extrémité jusqu'à distance de la ou des encoches, ladite portion étant dépourvue de nervure.

Selon un mode avantageux de l'invention, le guide a une section transversale constante généralement circulaire ou ovale.

Selon un mode avantageux de l'invention, les nervures longitudinales sont au nombre de deux au moins, préférentiellement au nombre de deux et diamétralement opposées.

Selon un mode avantageux de l'invention, les encoches sont au nombre de deux au moins et sont à des positions différentes suivant la direction principale. La différence de position assure une fonction de détrompage et de mise en position focale.

L'invention a également pour objet un module lumineux comprenant une zone de réception d'un guide optique de lumière en vue d'un couplage optique avec ledit guide ; remarquable en ce que la zone de réception du guide optique forme un fourreau apte à recevoir une extrémité du guide optique selon l'invention et avec des moyens d'engagement avec la ou les encoches dudit guide.

Selon un mode avantageux de l'invention, les moyens d'engagement du fourreau comprennent au moins une rainure ou nervure, formée à l'intérieur dudit fourreau et configurée pour engager avec la ou les encoches lors d'une rotation ou clippage dudit guide.

Selon un mode avantageux de l'invention, les moyens d'engagement du fourreau comprennent au moins une lamelle apte à se déformer élastiquement lors de l'insertion du guide optique dans ledit fourreau et à ensuite engager avec la ou les encoches dudit guide.

Selon un mode avantageux de l'invention, le module comprend le guide optique.

Les mesures de l'invention sont intéressantes en ce qu'elles permettent de réaliser des guides optiques de manière économique et flexible, essentiellement en ce que la réalisation de motifs diffusants ou réfléchissants peut être facilement adaptée d'un guide à l'autre en modifiant les données du parcours et/ou de l'intensité du faisceau laser réalisant lesdits motifs. Cette technique de réalisation est particulièrement intéressante pour les guides optiques de grande longueur, plus particulièrement lorsqu'ils sont fabriqués par extrusion. La présence d'une ou plusieurs nervures longitudinales sur le guide optique est particulièrement intéressante lorsque le guide optique est fabriqué par extrusion. De plus, ces nervures peuvent être aisément découpées par application d'un faisceau laser en vue de former des encoches de rétention du guide optique dans un fourreau de module lumineux.

D'autres caractéristiques et avantages de la présente invention seront mieux compris à l'aide de la description et des dessins parmi lesquels :
- La figure 1 est une illustration schématique de réalisation d'un guide optique par extrusion ;
- La figure 2 est une illustration schématique de réalisation de motifs diffusants ou réfléchissants sur la surface extérieure d'un guide optique par application de rayon laser, conformément à l'invention ;
- La figure 3 illustre différentes configuration de motifs diffusants ou réfléchissants sur la surface extérieure d'un guide optique, conformément à l'invention ;
- La figure 4 illustre de manière schématique la formation des motifs diffusants ou réfléchissants par le positionnement du rayon laser et par la profondeur de creux formés par le rayon laser ;
- La figure 5 illustre un accouplement entre un guide optique et un module lumineux, conformément à une premier mode de réalisation de l'invention ;
- La figure 6 est une vue détaillée et suivant une autre perspective de l'accouplement de la figure 5 ;
- La figure 7 illustre un accouplement entre un guide optique et un module lumineux, conformément à un deuxième mode de réalisation de l'invention.

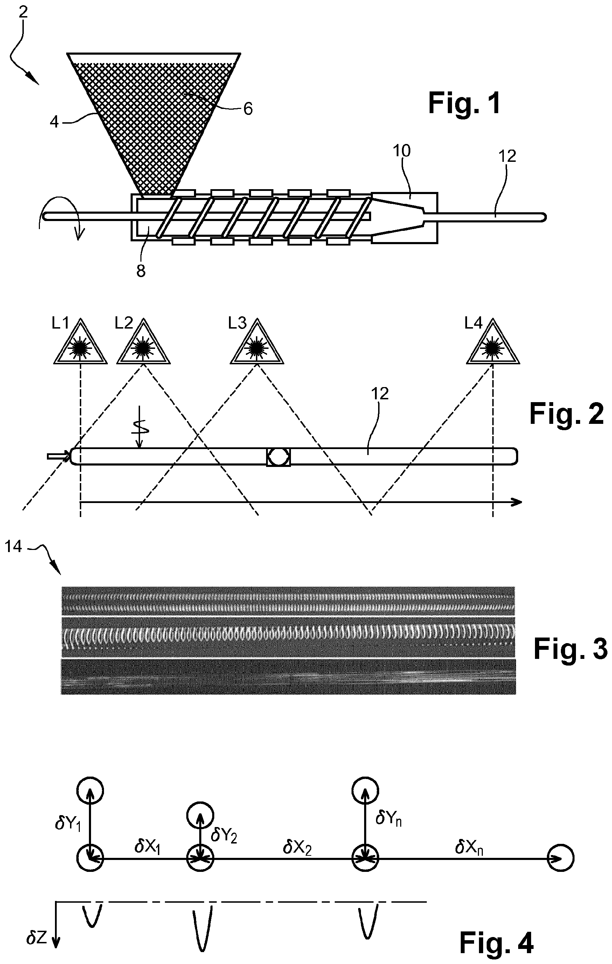

La figure 1 illustre schématiquement un dispositif et un procédé de fabrication d'un guide optique par extrusion. Un tel dispositif et procédé est connu en soi pour la fabrication de divers produits longs, tel que des barreaux ou profilés en matière plastique.

Le dispositif d'extrusion 2 comprend, essentiellement une trémie d'alimentation 4 recevant la matière plastique solide 6 sous forme de granulés. La trémie 4 alimente un dispositif à vis 8 pourvu de moyens de chauffage et d'une douille d'extrusion 10. La matière plastique, en l'occurrence thermoplastique, est rendu pâteuse par l'augmentation de température provoquée par les moyens de chauffage et est poussée vers la douille par rotation de la vis, pour en sortir dans un état essentiellement plastique, c'est-à-dire dur en surface et mou à l'intérieur, et former le guide optique 12. Le guide optique 12 présente alors une section transversale de forme constante et une surface extérieure généralement lisse.

Le guide optique 12 peut présenter une longueur supérieure ou égale à 500mm, préférentiellement supérieur ou égale à 1000mm. La section transversale peut être de toute forme, préférentiellement généralement circulaire ou ovale, avec un diamètre moyen qui peut être supérieur ou égal à 3mm et/ou inférieur ou égal à 5mm.

La figure 2 illustre la réalisation de motifs diffusants ou réfléchissants sur la surface extérieure du guide optique 12 avantageusement réalisé par un procédé d'extrusion tel que décrit en relation avec la figure 1. Un ou plusieurs sources laser L₁, L₂, L₃,...Lₙ peuvent être utilisées. Il s'agit avantageusement de sources laser à CO₂ émettant dans l'infrarouge, entre 9,4 et 10,6µm. De tels lasers sont bien connus en soi de l'homme de métier. Le faisceau laser impactant la surface extérieure du guide optique 12 a pour effet d'en augmenter la température au point d'atteindre et dépasser la température de fusion du matériau thermoplastique. Ce dernier va alors de déformer pour former une cavité et donc une portion de surface géométriquement différente de la surface extérieure avoisinante. Cette portion de surface va alors former un dioptre fonctionnellement différent du dioptre formé par la surface extérieure avoisinante. Si elle est lisse, cette portion de surface pourra réfléchir différemment les rayons incidents se propageant dans le guide, suivant une orientation qui leur permet d'être ensuite réfractés et sortir du guide optique. Si elle est rugueuse, elle va réfracter les rayons suivant une multitude de direction et ainsi diffuser les rayons à l'extérieur du guide optique.

Les lasers peuvent être commandés afin de déplacer le faisceau produit. Une variation de la vitesse de déplacement du faisceau sur la surface extérieure du guide optique 12 permet de faire varier l'intensité de réchauffement de la matière et ainsi la profondeur du motif. Un déplacement du faisceau, voire un arrêt de celui-ci, va réaliser un motif davantage profond qu'un faisceau se déplaçant plus vite, pour une puissance de faisceau donnée. La vitesse déplacement du faisceau a également un impact sur le fini de la surface modifiée, cette dernière pouvant être lisse ou rugueuse. Les lasers peuvent aussi être commandés en puissance. La combinaison de commande en déplacement et en puissance du faisceau laser permet de réaliser des motifs réfléchissants et d'autres motifs diffusants.

A titre indicatif, la puissance nominale d'un laser de l'ordre de 80W peut être modulée ente 60 et 120%, ou encore une puissance nominale de l'ordre de 150 à 200W peut être modulée entre 40 et 60%.

La figure 3 illustre différents types de motifs 14 envisageables. La bande supérieure montre deux rangées de motifs transversaux relativement courts. La bande intermédiaire montre des motifs formant des lignes transversales et des motifs en forme de points. La bande inférieure monte plusieurs rangées, en l'occurrence 5, des motifs de plus petite taille. Il est toutefois entendu que d'autres configurations sont bien sûr envisageables.

Une opération de lissage d'un ou des deux extrémités du guide optique peut être réalisée au moyen d'un laser tel qu'un des lasers L₁, L₂, L₃,...Lₙ de la figure 2.

La figure 4 illustre de manière quelque peu schématique, les directions de déplacement suivant les axes x et y du faisceau du laser sur la surface extérieure du guide optique. L'axe x correspond à la direction longitudinale et l'axe y correspond à la direction transversale. L'axe z correspond à la profondeur du motif formé dans la surface extérieure du guide optique. Les taches circulaires correspondent à l'impact du faisceau laser sur le guide optique. On peut observer que le faisceau laser peut être déplacé transversalement d'une distance δy₁. Durant ce déplacement le faisceau laser peut rester actif ou, alternativement, être interrompu. Dans le premier cas, le motif s'étendra transversalement et dans le second cas, deux motifs essentiellement ponctuels seront formés. En fonction de la puissance du faisceau laser et de la vitesse de déplacement de celui-ci ou du temps d'arrêt de celui-ci, la profondeur du ou des motifs sera plus ou moins grande. Le faisceau peut ensuite être déplacé longitudinalement d'une distance δx₁ et ensuite transversalement d'une distance δy₂. Similairement, en fonction de la puissance du faisceau laser et de la vitesse de déplacement de celui-ci ou du temps d'arrêt de celui-ci, la profondeur du ou des motifs sera plus ou moins grande. On peut observer que la profondeur du motif réalisé par le déplacement δy₂ est plus importante.

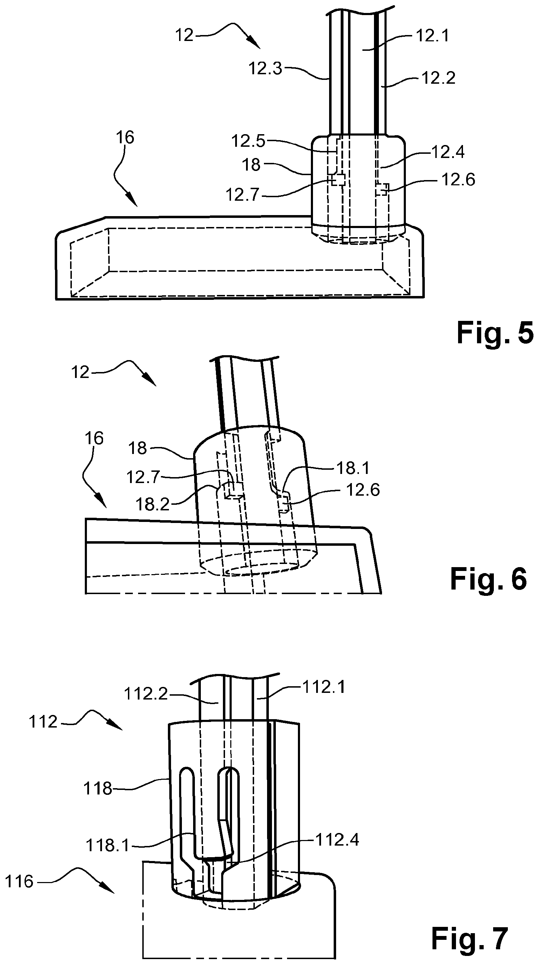

Les figures 5 à 7 illustrent deux modes de réalisation d'accouplement entre un guide optique avantageusement réalisé suivant le procédé décrit ci-avant et un module lumineux. Les figures 5 et 6 illustrent un premier mode de réalisation et la figure 7 illustre un deuxième mode de réalisation.

Aux figures 5 et 6, on peut observer que le guide optique 12 présente une partie centrale 12.1 généralement circulaire et deux nervures 12.2 et 12.3 s'étendant longitudinalement et de manière radialement opposée le long de la partie centrale 12.1. La section du guide optique 12 est par ailleurs représentée à la figure 2, à une partie centrale du guide optique 12.

Une extrémité du guide optique 12 est engagée dans un module lumineux 16. Plus particulièrement, ce dernier comprend un fourreau 18 recevant ladite extrémité. On observe également, par transparence au travers du fourreau, que les nervures 12.2 et 12.3 présentent, chacune, une encoche 12.4 et 12.5, respectivement. Plus particulièrement encore, ces encoches 12.4 et 12.5 forment les ergots 12.6 et 12.7, ces ergots pouvant alors coopérer par engagement avec des rainures ou nervures correspondantes formées à l'intérieur du fourreau 18. Les ergots 12.6 et 12.7 sont avantageusement à distance de l'extrémité proximale du guide optique de manière à ce que la portion d'extrémité dudit guide s'étendant depuis l'extrémité en question jusqu'aux ergots soit libre de nervure. Dans le cas d'un guide avec une portion centrale 12.1 circulaire, cette portion d'extrémité peut alors être reçue par un alésage circulaire et ainsi assurer un enfichage et un maintien satisfaisant du guide optique 12 dans le fourreau 18. Après avoir été enfiché, le guide optique 12 peut ensuite être tourné d'une fraction de tour afin d'engager les ergots 12.6 et 12.7 avec les rainures correspondantes du fourreau. La portion d'extrémité peut à cette occasion tourner librement tout en assurant un maintien satisfaisant du guide optique dans le fourreau.

A la figure 6 montrant le fourreau 18 et le guide optique 12 suivant une perspective quelque peu différente, on peut observer les deux rainures 18.1 et 18.2, généralement horizontales, avec lesquelles les ergots 12.6 et 12.7 coopèrent à l'occasion de la rotation du guide optique dans le fourreau.

La figure 7 illustre le deuxième mode de réalisation d'accouplement entre un guide optique et un module lumineux. Les numéros de référence des figures 5 et 6 sont utilisés pour désigner les éléments identiques ou correspondants, ces numéros étant toutefois majorés de 100.

Similairement au mode de réalisation des figures 5 et 6, le guide optique 112 comprend une portion centrale 112.1 et deux nervures longitudinales et opposées radialement. A la figure 7, seule une des nervures, en l'occurrence la nervure 112.2 est visible. Il est également entendu que la présence d'une seule nervure est également envisageable. Chacune des nervures présente une encoche 112.4 apte à engager avec une lamelle 118.1 du fourreau 118. La ou chacune des lamelles est déformable élastiquement lors de l'insertion du guide optique 112 dans le fourreau 118, pour ensuite revenir à sa forme initiale lorsque la zone de contact de ladite lamelle avec la rainure est en face de l'encoche 112.4. Dans cette configuration, la ou les nervures peuvent s'étendre jusqu'à l'extrémité proximale du guide optique, essentiellement car aucune rotation n'a lieu entre le guide optique 112 et le fourreau 118.

Dans les deux modes de réalisation ci-avant et de manière générale, la ou les encoches dans la ou les nervures peuvent être réalisées par application d'un rayon laser. Le rayon laser découpe alors la ou les nervures en vue de former la ou les encoches. Il en résulte que les encoches peuvent être très aisément réalisées par enlèvement de matière, en l'occurrence par application d'un rayon laser. L'enlèvement de matière pourrait toutefois également être réalisé par d'autres techniques, comme notamment par usinage.

## Revendications

1. Procédé de fabrication d'un guide optique (12 ; 112) de lumière, comprenant les étapes suivantes :
- mise à disposition du guide optique (12; 112) s'étendant suivant une direction principale, ledit guide présentant une surface extérieure ;
- réalisation le long de la surface extérieure du guide optique, suivant la direction principale, de motifs diffusants ou réfléchissants (14) aptes faire sortir dudit guide la lumière ;
**caractérisé en ce que**
la réalisation des motifs diffusants ou réfléchissants (14) est assurée par application d'un rayon laser sur la surface extérieure du guide optique (12 ; 112).

2. Procédé selon la revendication 1, **caractérisé en ce qu'**à l'étape de mise à disposition du guide optique (12; 112), ledit guide présente une section constante.

3. Procédé selon l'une des revendications 1 et 2, **caractérisé en ce qu'**à l'étape de mise à disposition du guide optique (12 ; 112), ledit guide est réalisé par extrusion.

4. Procédé selon l'une des revendications 1 et 2, **caractérisé en ce que** ledit procédé comprend une étape préalable de réalisation du guide optique (12 ; 112) par extrusion.

5. Procédé selon l'une des revendications 1 à 4, **caractérisé en ce que** le guide optique (12 ; 112) est en matériau thermoplastique transparent ou translucide, dans le domaine des longueurs d'ondes transparentes, préférentiellement en poly(méthacrylate de méthyle) PMMA.

6. Procédé selon l'une des revendications 1 à 5, **caractérisé en ce qu'**à l'étape de réalisation des motifs diffusants ou réfléchissants, le rayon laser est émis par un laser au CO₂ (L₁, L₂, L₃,...Lₙ) émettant dans l'infrarouge entre 9,4 et 10,6 µm.

7. Procédé selon l'une des revendications 1 à 6, **caractérisé en ce qu'**à l'étape de réalisation des motifs diffusants ou réfléchissants (14), la configuration desdits motifs est évolutive le long de la direction principale du guide.

8. Procédé selon l'une des revendications 1 à 7, **caractérisé en ce qu'**à l'étape de mise à disposition du guide optique (12 ; 112), ledit guide présente au moins une nervure longitudinale (12.2, 12.3 ; 112.2), et le procédé comprend, en outre, l'étape suivante :
- réalisation d'au moins une encoche (12.4, 12.5 ; 112.4) dans la ou une des nervures (12.2, 12.3 ; 112.2) par enlèvement de matière au moyen d'un rayon laser.

9. Guide optique de lumière (12 ; 112) en matériau transparent ou translucide, dans le domaine des longueurs d'ondes visibles, s'étendant suivant une direction principale ;
**caractérisé en ce que** le guide comprend, en outre :
au moins une nervure longitudinale (12.2, 12.3 ; 112.2), ladite nervure ou au moins une desdites nervures formant au moins une encoche (12.4, 12.5; 112.4) à moins de 50mm d'une face d'extrémité dudit guide.

10. Guide optique (12) selon la revendication 9, **caractérisé en ce que** ledit guide présente une portion s'étendant depuis la face d'extrémité jusqu'à distance de la ou des encoches (12.4, 12.5), ladite portion étant dépourvue de nervure.

11. Guide optique (12 ; 112) selon l'une des revendications 9 et 10, **caractérisé en ce que** ledit guide a une section transversale constante généralement circulaire ou ovale.

12. Module lumineux (16 ; 116) comprenant une zone de réception d'un guide optique de lumière (12 ; 112) en vue d'un couplage optique avec ledit guide ;
**caractérisé en ce que**
la zone de réception du guide optique forme un fourreau (18 ; 118) apte à recevoir une extrémité du guide optique (12; 112) selon l'une des revendications 9 à 11 et avec des moyens d'engagement (18.1, 18.2 ; 118.1) avec la ou les encoches (12.4, 12.5 ; 112.4) dudit guide.

13. Module lumineux (16) selon la revendication 12, **caractérisé en ce que** les moyens d'engagement du fourreau (18) comprennent au moins une rainure (18.1, 18.2) formée à l'intérieur dudit fourreau et configurée pour engager avec la ou les encoches (12.4, 12.5) lors d'une rotation dudit guide.

14. Module lumineux (116) selon la revendication 12, **caractérisé en ce que** les moyens d'engagement du fourreau (118) comprennent au moins une lamelle (118.1) apte à se déformer élastiquement lors de l'insertion du guide optique (112) dans ledit fourreau et à ensuite engager avec la ou les encoches (112.4) dudit guide.
